# EUROPEAN PATENT APPLICATION

(11) **EP 3 133 862 A1**
(43) Date of publication of application: **22.02.2017**
(21) Application number: 14891307.2
(22) Date of filing: 08.05.2014
(51) Int. Cl.: H04W 36/00

(54) **CELL SWITCHING METHOD, DEVICE AND SYSTEM**

(71) Applicant: Huawei Technologies Co. Ltd., Shenzhen, Guangdong 518129 (CN)
(72) Inventor: XU, Min, Shenzhen Guangdong 518129 (CN); XU, Xiaoying, Shenzhen Guangdong 518129 (CN)
(74) Representative: Thun, Clemens
(86) International application number: PCT/CN2014/077077
(87) International publication number: WO 2015/168916

(57) **Abstract**

Embodiments of the present invention provide a cell handover method. In the method: a first operation indicator and a preconfigured parameter that are sent by an RNC are received; and if the first operation indicator is used to instruct to hand over a downlink serving cell, according to a configuration parameter of a downlink HS-DSCH link, the downlink serving cell is handed over from a serving cell to a target cell and an uplink serving cell is kept in the serving cell; or if the first operation indicator is used to instruct to hand over only an uplink serving cell, the uplink serving cell is handed over from a serving cell to a target cell according to a configuration parameter of an uplink E-DCH link. By means of this method, cell decoupling can be completed in a process of completing cell handover, which avoids a complex process in which UE performs decoupling after the UE hands over both an uplink serving cell and a downlink serving cell to a target cell, improves serving cell decoupling efficiency, avoids signaling overheads caused by repeated transmission of a configuration parameter, and saves system resources.

## Description

### BACKGROUND

With development of mobile communications technologies, users have increasingly high requirements. A quantity of system cells may multiply by introducing small cells (English: Small Cell) to an existing macro network. If a throughput of a small cell remains unchanged, a system capacity may multiply (or even increase tenfold). A small cell base station corresponding to a small cell may be a home eNodeB, or referred to as a picocell base station (English: Pico), a micro base station (English: Micro), or a micro base station (English: Low Power Node, LPN for short). The following collectively uses a small cell base station to represent such type of base station, and a gateway thereof, for example, a gateway of a home eNodeB, is collectively referred to as a base station gateway.

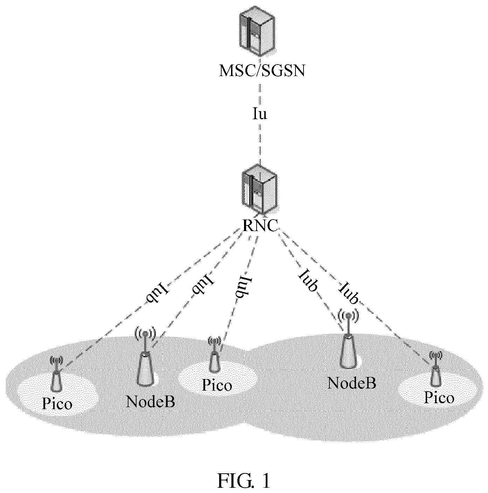

FIG. 1 is a structural diagram of deployment of small cells and macro cells in the prior art. In FIG. 1, small cells Picos and macro cells NodeBs share a radio network controller (English: Radio Network Controller, RNC for short). In this case, a small cell base station has a function similar to that of a macro cell base station, and the small cell base station directly interacts with the RNC by using a logical interface Iub.

The small cells and the macro cells may be deployed on a same frequency in a network or may be deployed on different frequencies in a network. When the small cells and the macro cells are deployed on a same frequency in a network, because a path loss of an uplink of user equipment (English: User Equipment, UE for short) in a small cell is relatively small, uplink transmit power of the UE is gradually reduced in a power control process, resulting in that a macro base station cannot receive an uplink signal of the UE, and certainly, cannot receive uplink scheduling information. The macro cell is used as a serving cell of the UE, that is, a serving enhanced dedicated transport channel (English: Enhanced Dedicated Transport Channel, E-DCH for short) cell and a serving high speed downlink shared channel (English: High Speed Downlink Shared Channel, HS-DSCH for short) cell need to be a same cell, and a serving cell is determined based on a downlink signal measured by the UE. In this case, because downlink signal quality of the macro cell is still higher than that of the small cell, the macro cell is still the serving cell. Because the macro base station cannot receive or cannot correctly demodulate the uplink signal sent by the UE, the macro base station cannot correctly implement uplink data scheduling on the UE according to the scheduling information of the UE, and the macro base station cannot schedule the UE.

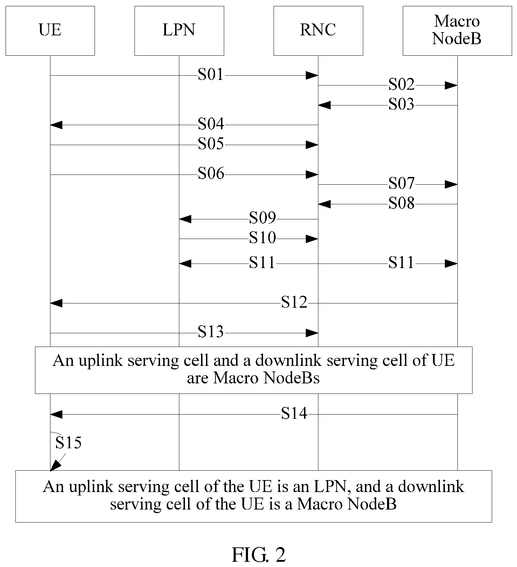

In addition, currently, there is a procedure of rapid cell handover. A method whose specific procedure is shown in FIG. 2 is an execution procedure in which UE moves from a small cell to a macro cell. Before the procedure shown in FIG. 2 is performed, an uplink serving cell and a downlink serving cell of the UE are both LPNs, and specific steps of the procedure are as follows:
S01. The UE reports, to an RNC, that it is detected that the macro cell exceeds a threshold (event 1A).
S02. The RNC delivers, to the macro base station MacroNodeB, a radio link setup request that carries a preconfigured parameter, where the preconfigured parameter includes a configuration parameter of a serving E-DCH cell and a downlink configuration parameter of a serving HS-DSCH cell, or referred to as a configuration parameter of an uplink E-DCH link and a downlink HS-DSCH link parameter.
S03. The MacroNodeB returns a radio link setup response to the RNC.
S04. The RNC sends an active set update message to the UE, where the active set update message is used to instruct the UE to wait for serving cell handover, and the active set update message carries a preconfigured parameter used by the UE to perform uplink/downlink reconfiguration.
S05. The UE returns an active set update response to the RNC.
S06. The UE reports, to the RNC, that a cell whose signal quality is currently the highest changes (event ID), that is, the macro cell has higher signal quality than the small cell.
S07. The RNC sends a radio link reconfiguration prepare request to the MacroNodeB.
S08. The MacroNodeB sends a radio link reconfiguration response to the RNC.
S09. The RNC sends a radio link reconfiguration prepare request to an LPN.
S10. The LPN sends a radio link reconfiguration response to the RNC.
S11. The RNC delivers radio link reconfiguration acknowledgment information to the LPN and the MacroNodeB.
S12. The MacroNodeB delivers a high speed shared control channel (English: High Speed Shared Control Channel, HS-SCCH for short) order to the UE, where the HS-SCCH order is used to instruct the UE to configure a corresponding link according to the preconfigured parameter, to implement uplink/downlink serving cell handover. In this case, optionally, the LPN may send a reconfiguration message to the UE to trigger the UE to perform uplink/downlink serving cell handover.
S13. The UE configures an HS-DSCH link configuration parameter, and hands over the serving E-DCH cell and the serving HS-DSCH cell to the MacroNodeB, and the UE sends a reconfiguration completion message to the RNC.

The foregoing S01 to S13 describe a process in which the UE hands over an uplink serving cell or a downlink serving cell to the MacroNodeB. After the handover is completed, to avoid a problem that the MacroNodeB cannot receive uplink data of the UE, uplink/downlink serving cell decoupling further needs to be completed. A specific process of the decoupling is as follows:
Steps S07 to S11 are performed again, and then S14 is performed. A difference lies in that previously in steps S07 to S11, a MacroNodeB cell is configured as an uplink serving cell and a downlink serving cell, and correspondingly, a link of the MacroNodeB also changes to a serving HS-DSCH link and a serving E-DCH link. An LPN cell is configured as a non-serving cell, and a corresponding link is a non-serving E-DCH link. Because there is only one HS-DSCH link, in this case, the LPN does not have an HS-DSCH link. However, currently in the steps, the MacroNodeB cell is configured as a downlink serving cell and an uplink non-serving cell, and the LPN cell is configured as an uplink serving cell.
S14. The MacroNodeB delivers a reconfiguration instruction to the UE, where the reconfiguration instruction carries an uplink configuration parameter for configuring an E-DCH link.
S15. The UE reconfigures an E-DCH link according to the uplink configuration parameter in the reconfiguration instruction, so that a serving E-DCH cell of the UE is the LPN.

Uplink/downlink cell decoupling is completed by means of the foregoing procedure, that is, the serving E-DCH cell is the LPN, and the serving HS-DSCH cell is the MacroNodeB.

It can be seen from the foregoing procedure that, before cell decoupling is performed, the uplink and downlink serving cells first need to be handed over to a same cell, and then decoupling can be performed. As a result, a decoupling process is relatively complex, and repeated configuration of a related E-DCH parameter also increases signaling overheads, causing a waste of resources.

### SUMMARY

The present invention provides a cell handover method, apparatus, and system, so as to resolve problems of a complex decoupling process and a waste of resources due to increased signaling overheads caused by repeated transmission of a configuration parameter.

Specific technical solutions of the present invention are as follows:
A first aspect of the present invention provides a cell handover method, including:
   receiving a first operation indicator and a preconfigured parameter that are sent by a radio network controller RNC; and
   when the first operation indicator is used to instruct to hand over only a downlink serving cell, obtaining a configuration parameter of a downlink high speed physical downlink shared channel HS-DSCH link from the preconfigured parameter, and according to the configuration parameter of the downlink HS-DSCH link, handing over the downlink serving cell from a serving cell to a target cell and keeping an uplink serving cell in the serving cell; or
   when the first operation indicator is used to instruct to hand over only an uplink serving cell, obtaining a configuration parameter of an uplink enhanced dedicated transport channel E-DCH link from the preconfigured parameter, and handing over the uplink serving cell from a serving cell to a target cell according to the configuration parameter of the uplink E-DCH link.

With reference to the first aspect, in a first possible implementation manner, the receiving a first operation indicator and a preconfigured parameter that are sent by a radio network controller RNC includes:
when an active set update message delivered by the RNC is received, obtaining the first operation indicator and the preconfigured parameter from the active set update message, where the configuration parameter of the downlink high speed physical downlink shared channel HS-DSCH link and/or the configuration parameter of the uplink enhanced dedicated transport channel E-DCH link are configured in the preconfigured parameter.

With reference to the first aspect or the first possible implementation manner of the first aspect, in a second possible implementation manner, when only the uplink serving cell is to be handed over, after the handover the uplink serving cell from a serving cell to a target cell according to the configuration parameter of the uplink E-DCH link, the method further includes:
receiving a handover instruction or message that is sent by a target base station that corresponds to the target cell or by the RNC and that is used to instruct user equipment to perform serving cell handover; and
handing over the downlink serving cell to the target cell according to the received first operation indicator and the configuration parameter of the downlink HS-DSCH link that is included in the preconfigured parameter, where the configuration parameter of the uplink E-DCH link remains unchanged.

With reference to the first aspect or the first possible implementation manner of the first aspect, in a third possible implementation manner, when only the downlink serving cell is to be handed over, after the handover the downlink serving cell from a serving cell to a target cell according to the configuration parameter of the downlink HS-DSCH link, the method further includes:
receiving a reconfiguration message sent by the RNC;
obtaining, from the reconfiguration message, a second operation indicator that is used to instruct to hand over the uplink serving cell to the target cell; and
if a configuration parameter of an uplink E-DCH link that is carried in the reconfiguration message is the same as the configuration parameter of the uplink E-DCH link in the preconfigured parameter, handing over the uplink serving cell to the target cell according to the second operation indicator and the configuration parameter of the uplink E-DCH link in the reconfiguration message; or
if the reconfiguration message does not carry a configuration parameter of an uplink E-DCH link, handing over the uplink serving cell to the target cell according to the configuration parameter of the uplink E-DCH link in the preconfigured parameter.

With reference to the first aspect or the first possible implementation manner of the first aspect or the second possible implementation manner of the first aspect or the third possible implementation manner of the first aspect, in a fourth possible implementation manner of the first aspect, before the receiving a first operation indicator and a preconfigured parameter that are sent by a radio network controller RNC, the method further includes:
reporting to the RNC that a capability for enhanced uplink/downlink serving cell decoupling is supported, where the capability for enhanced uplink/downlink serving cell decoupling represents that the user equipment supports a combination of a serving cell handover function and an uplink/downlink serving cell decoupling function.

A second aspect of the present invention provides a cell handover control method, including:
when a first triggering event that is reported by user equipment and that is used to represent that the user equipment is to move from a serving cell to a target cell is received, generating a first operation indicator that is used to instruct the user equipment to hand over an uplink serving cell or a downlink serving cell to the target cell;
determining a preconfigured parameter that is used to configure a downlink high speed physical downlink shared channel HS-DSCH link and/or an uplink enhanced dedicated transport channel E-DCH link of the user equipment; and
delivering the first operation indicator and the preconfigured parameter to the user equipment, so that the user equipment hands over the downlink serving cell or the uplink serving cell to the target cell according to the first operation indicator and the preconfigured parameter.

With reference to the second aspect, in a first possible implementation manner, when the first triggering event occurs, before the generating a first operation indicator that is used to instruct the user equipment to hand over an uplink serving cell or a downlink serving cell to the target cell, the method further includes:
detecting whether a report, which is sent by the user equipment, of supporting a capability for enhanced uplink/downlink serving cell decoupling is received, where the enhanced uplink/downlink serving cell decoupling represents that the user equipment supports a combination of a serving cell handover function and an uplink/downlink serving cell decoupling function.

A third aspect of the present invention provides a method for indicating a cell, including:
obtaining an indicator of an uplink serving cell on a secondary frequency that is sent by a radio network controller RNC, where the indicator of the uplink serving cell includes one or a combination of the following information: an indicator of an uplink serving link on the secondary frequency, a scrambling code of an uplink serving cell on the secondary frequency, or cell timing reference configuration information of a primary frequency and cell timing reference configuration information of the secondary frequency; and
determining that a link indicated by the indicator of the uplink serving link is the uplink serving link on the secondary frequency, if the indicator of the uplink serving cell includes the indicator of the uplink serving link on the secondary frequency; or
determining that a link that includes the scrambling code of the uplink serving cell is the uplink serving link on the secondary frequency, if the scrambling code of the uplink serving cell on the secondary frequency is received.

A fourth aspect of the present invention provides a cell handover apparatus, including:
a receiving module, configured to receive a first operation indicator and a preconfigured parameter that are sent by a radio network controller RNC; and
a handover module, configured to: when the first operation indicator is used to instruct to hand over only a downlink serving cell, obtain a configuration parameter of a downlink high speed physical downlink shared channel HS-DSCH link from the preconfigured parameter, and according to the configuration parameter of the downlink HS-DSCH link, hand over the downlink serving cell from a serving cell to a target cell and keep an uplink serving cell in the serving cell; or when the first operation indicator is used to instruct to hand over only an uplink serving cell, obtain a configuration parameter of an uplink enhanced dedicated transport channel E-DCH link from the preconfigured parameter, and hand over the uplink serving cell from a serving cell to a target cell according to the configuration parameter of the uplink E-DCH link.

With reference to the fourth aspect, in a first possible implementation manner, the receiving module is specifically configured to: when an active set update message delivered by the RNC is received, obtain the first operation indicator and the preconfigured parameter from the active set update message, where the configuration parameter of the downlink high speed physical downlink shared channel HS-DSCH link and/or the configuration parameter of the uplink enhanced dedicated transport channel E-DCH link are configured in the preconfigured parameter.

With reference to the fourth aspect or the first possible implementation manner of the fourth aspect, in a second possible implementation manner, the receiving module is further configured to receive a handover instruction or message that is sent by a target base station that corresponds to the target cell or by the RNC and that is used to instruct user equipment to perform serving cell handover; and
the handover module is further configured to hand over the downlink serving cell to the target cell according to the received first operation indicator and the configuration parameter of the downlink HS-DSCH link that is included in the preconfigured parameter, where the configuration parameter of the uplink E-DCH link remains unchanged.

With reference to the fourth aspect or the first possible implementation manner of the fourth aspect, in a third possible implementation manner, the receiving module is further configured to receive a reconfiguration message sent by the RNC; and
the handover module is further configured to: obtain, from the reconfiguration message, a second operation indicator that is used to instruct to hand over the uplink serving cell to the target cell; and if a configuration parameter of an uplink E-DCH link that is carried in the reconfiguration message is the same as the configuration parameter of the uplink E-DCH link in the preconfigured parameter, hand over the uplink serving cell to the target cell according to the second operation indicator and the configuration parameter of the uplink E-DCH link in the reconfiguration message; or if the reconfiguration message does not carry a configuration parameter of an uplink E-DCH link, hand over the uplink serving cell to the target cell according to the configuration parameter of the uplink E-DCH link in the preconfigured parameter.

With reference to the fourth aspect or the first possible implementation manner of the fourth aspect or the second possible implementation manner of the fourth aspect or the third possible implementation manner of the fourth aspect, in a fourth possible implementation manner, the method further includes:
a reporting module, configured to report to the RNC that a capability for enhanced uplink/downlink serving cell decoupling is supported, where the capability for enhanced uplink/downlink serving cell decoupling represents that the user equipment supports a combination of a serving cell handover function and an uplink/downlink serving cell decoupling function.

A fifth aspect of the present invention provides a cell handover control apparatus, including:
a generation module, configured to: when a first triggering event that is reported by user equipment and that is used to represent that the user equipment is to move from a serving cell to a target cell is received, generate a first operation indicator that is used to instruct the user equipment to hand over an uplink serving cell or a downlink serving cell to the target cell;
a determining module, configured to determine a preconfigured parameter that is used to configure a downlink high speed physical downlink shared channel HS-DSCH link and/or an uplink enhanced dedicated transport channel E-DCH link of the user equipment; and
a delivering module, configured to deliver the first operation indicator and the preconfigured parameter to the user equipment, so that the user equipment hands over the downlink serving cell or the uplink serving cell to the target cell according to the first operation indicator and the preconfigured parameter.

With reference to the fifth aspect, in a first possible implementation manner, the method further includes:
a detection module, configured to detect whether a report, which is sent by the user equipment, of supporting a capability for enhanced uplink/downlink serving cell decoupling is received, where the enhanced uplink/downlink serving cell decoupling represents that the user equipment supports a combination of a serving cell handover function and an uplink/downlink serving cell decoupling function.

A sixth aspect of the present invention provides a cell handover apparatus, including:
an obtaining module, configured to obtain an uplink serving cell indicator, sent by a radio network controller RNC; and
a determining module, configured to determine an uplink serving cell or an uplink serving link according to the uplink serving cell indicator.
A seventh aspect of the present invention provides a device, including one or more processors, a memory, and one or more programs, where the one or more programs are stored in the memory, and the one or more processors invoke the one or more programs from the memory and execute the one or more programs; and
the one or more programs are configured for performing the following steps:
   receiving a first operation indicator and a preconfigured parameter that are sent by a radio network controller RNC; and
   when the first operation indicator is used to instruct to hand over only a downlink serving cell, obtaining a configuration parameter of a downlink high speed physical downlink shared channel HS-DSCH link from the preconfigured parameter, and according to the configuration parameter of the downlink HS-DSCH link, handing over the downlink serving cell from a serving cell to a target cell and keeping an uplink serving cell in the serving cell; or
   when the first operation indicator is used to instruct to hand over only an uplink serving cell, obtaining a configuration parameter of an uplink enhanced dedicated transport channel E-DCH link from the preconfigured parameter, and handing over the uplink serving cell from a serving cell to a target cell according to the configuration parameter of the uplink E-DCH link.

With reference to the seventh aspect, in a first possible implementation manner, the one or more programs are further configured for performing the following step:
when an active set update message delivered by the RNC is received, obtaining the first operation indicator and the preconfigured parameter from the active set update message, where the configuration parameter of the downlink high speed physical downlink shared channel HS-DSCH link and/or the configuration parameter of the uplink enhanced dedicated transport channel E-DCH link are configured in the preconfigured parameter.

With reference to the seventh aspect or the first possible implementation manner of the seventh aspect, in a second possible implementation manner, the one or more programs are further configured for performing the following steps:
receiving a handover instruction or message that is sent by a target base station that corresponds to the target cell or by the RNC and that is used to instruct user equipment to perform serving cell handover; and
handing over the downlink serving cell to the target cell according to the received first operation indicator and the configuration parameter of the downlink HS-DSCH link that is included in the preconfigured parameter, where the configuration parameter of the uplink E-DCH link remains unchanged.

With reference to the seventh aspect or the first possible implementation manner of the seventh aspect, in a third possible implementation manner, the one or more programs are further configured for performing the following steps:
receiving a reconfiguration message sent by the RNC;
obtaining, from the reconfiguration message, a second operation indicator that is used to instruct to hand over the uplink serving cell to the target cell; and
if a configuration parameter of an uplink E-DCH link that is carried in the reconfiguration message is the same as the configuration parameter of the uplink E-DCH link in the preconfigured parameter, handing over the uplink serving cell to the target cell according to the second operation indicator and the configuration parameter of the uplink E-DCH link in the reconfiguration message; or
if the reconfiguration message does not carry a configuration parameter of an uplink E-DCH link, handing over the uplink serving cell to the target cell according to the configuration parameter of the uplink E-DCH link in the preconfigured parameter.

With reference to the seventh aspect or the first possible implementation manner of the seventh aspect or the second possible implementation manner of the seventh aspect or the third possible implementation manner of the seventh aspect, in a fourth possible implementation manner, the one or more programs are further configured for performing the following step:
reporting to the RNC that a capability for enhanced uplink/downlink serving cell decoupling is supported, where the capability for enhanced uplink/downlink serving cell decoupling represents that the user equipment supports a combination of a serving cell handover function and an uplink/downlink serving cell decoupling function.
An eighth aspect of the present invention provides a radio network controller, including one or more processors, a memory, and one or more programs, where the one or more programs are stored in the memory, and the one or more processors invoke the one or more programs from the memory and execute the one or more programs; and
the one or more programs are configured for performing the following steps:
   when a first triggering event that is reported by user equipment and that is used to represent that the user equipment is to move from a serving cell to a target cell is received, generating a first operation indicator that is used to instruct the user equipment to hand over an uplink serving cell or a downlink serving cell to the target cell;
   determining a preconfigured parameter that is used to configure a downlink high speed physical downlink shared channel HS-DSCH link and/or an uplink enhanced dedicated transport channel E-DCH link of the user equipment; and
   delivering the first operation indicator and the preconfigured parameter to the user equipment, so that the user equipment hands over the downlink serving cell or the uplink serving cell to the target cell according to the first operation indicator and the preconfigured parameter.

With reference to the eighth aspect, in a first possible implementation manner, the one or more programs are further configured for performing the following step:
detecting whether a report, which is sent by the user equipment, of supporting a capability for enhanced uplink/downlink serving cell decoupling is received, where the enhanced uplink/downlink serving cell decoupling represents that the user equipment supports a combination of a serving cell handover function and an uplink/downlink serving cell decoupling function.

Embodiments of the present invention provide a cell handover method. In the method: a first operation indicator and a preconfigured parameter that are sent by an RNC are received; and if the first operation indicator is used to instruct to hand over a downlink serving cell, according to a configuration parameter of a downlink HS-DSCH link, the downlink serving cell is handed over from a serving cell to a target cell and an uplink serving cell remains unchanged; or if the first operation indicator is used to instruct to hand over only an uplink serving cell, the uplink serving cell is handed over from a serving cell to a target cell according to a configuration parameter of an uplink E-DCH link. By means of this method, cell decoupling can be completed in a process of completing cell handover, which avoids a complex process in which UE performs decoupling after the UE hands over both an uplink serving cell and a downlink serving cell to a target cell, improves serving cell decoupling efficiency, avoids signaling overheads caused by repeated transmission of a configuration parameter, and saves system resources.

### BRIEF DESCRIPTION OF DRAWINGS

FIG. 1 is a schematic structural diagram of a network architecture in the prior art;
FIG. 2 a flowchart of a cell handover and cell decoupling method in the prior art;
FIG. 3 is a schematic structural diagram of another network architecture in the prior art;
FIG. 4 is a schematic structural diagram of another network architecture in the prior art;
FIG. 5 is a flowchart of a cell handover method according to an embodiment of the present invention;
FIG. 6 is an interaction flowchart of a cell handover method according to an embodiment of the present invention;
FIG. 7 is an interaction flowchart of cell decoupling according to an embodiment of the present invention;
FIG. 8 is a flowchart of a cell handover control method according to an embodiment of the present invention;
FIG. 9 is a schematic structural diagram of a cell handover apparatus according to an embodiment of the present invention;
FIG. 10 is a schematic structural diagram of another cell handover apparatus according to an embodiment of the present invention;
FIG. 11 is a schematic structural diagram of a cell handover control apparatus according to an embodiment of the present invention; and
FIG. 12 is a schematic structural diagram of another cell handover control apparatus according to an embodiment of the present invention.

### DESCRIPTION OF EMBODIMENTS

First, a cell handover method in the embodiments of the present invention may be applied to at least three network architectures as follows:

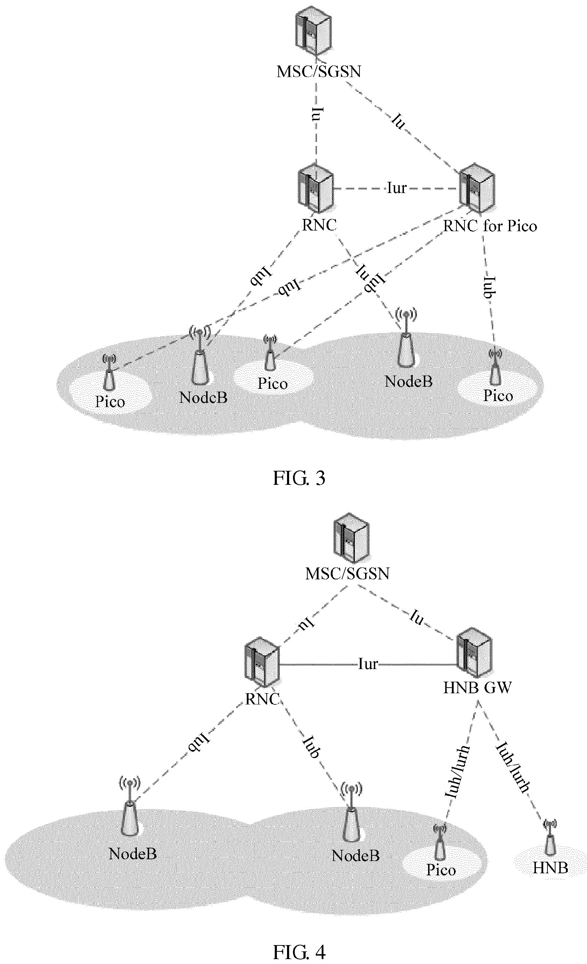

FIG. 1 shows a network architecture of small cells Picos and macro cells NodeBs, and details of the network architecture shown in FIG. 1 are no longer described. FIG. 3 shows another network architecture of small cells and macro cells. In the network architecture in FIG. 3, a micro base station in a small cell is managed by a separate RNC. The RNC that manages the micro base station is connected to a macro RNC by using an existing logical interface Iur. The micro base station is connected to the RNC by using an Iub interface, and exchanges information with the macro RNC by using the Iur interface. In the network architectures in both FIG. 1 and FIG. 3, communication between the small cells and the RNCs is based on the Iub interface.

In a network architecture shown in FIG. 4, a micro base station implements functions of a radio network controller and a base station network, the base station network has a convergence function, the micro base station is connected to the base station network by using an Iuh or Iurh interface and is connected to the RNC by using an Iur interface, and information exchanged between the micro base station and the RNC needs to be forwarded by using the base station network.

The method provided in the embodiments of the present invention is applicable to all the foregoing three network architectures. The network architecture shown in FIG. 1 is a fundamental network architecture, the network architectures shown in both FIG. 3 and FIG. 4 are evolved architectures of that in FIG. 1. Therefore, what is applicable to the network architecture shown in FIG. 1 is definitely applicable to the network architectures shown in FIG. 3 and FIG. 4. Therefore, the network architecture shown in FIG. 1 is used for descriptions in all the following embodiments.

To resolve a problem of relatively large signaling overheads caused by repeated transmission of a configuration parameter due to a complex decoupling process of a current cell, the embodiments of the present invention provide a cell handover method, apparatus, and system, where: a first operation indicator and a preconfigured parameter that are sent by an RNC are received; and if the first operation indicator is used to instruct to hand over a downlink serving cell, the downlink serving cell is handed over from a serving cell to a target cell according to a configuration parameter of a downlink HS-DSCH link, and an uplink serving cell remains unchanged; or if the first operation indicator is used to instruct to hand over only an uplink serving cell, the uplink serving cell is handed over from a serving cell to a target cell according to a configuration parameter of an uplink E-DCH link, so that cell decoupling is also completed in a process of completing cell handover, which avoids a complex process in which UE performs decoupling after the UE hands over both an uplink serving cell and a downlink serving cell to a target cell, improves efficiency of serving cell decoupling, avoids signaling overheads caused by repeated transmission of a configuration parameter, and saves system resources.

Technical solutions of the present invention are described in detail below by using the accompanying drawings and specific embodiments.

### Embodiment 1

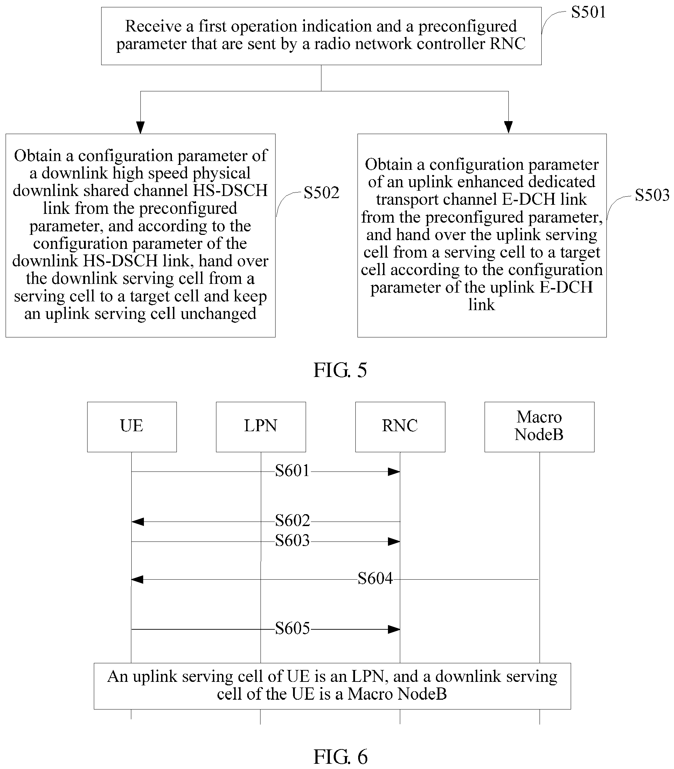

FIG. 5 is a flowchart of a cell handover method in this embodiment of the present invention. The method includes:
S501. Receive a first operation indicator and a preconfigured parameter that are sent by a radio network controller RNC, and when the first operation indicator is used to instruct to hand over a downlink serving cell, perform S502; or when the first operation indicator is used to instruct to hand over an uplink serving cell, perform S503.
S502. Obtain a configuration parameter of a downlink high speed physical downlink shared channel HS-DSCH link from the preconfigured parameter, and according to the configuration parameter of the downlink HS-DSCH link, hand over the downlink serving cell from a serving cell to a target cell and keep an uplink serving cell in the serving cell.
S503. Obtain a configuration parameter of an uplink enhanced dedicated transport channel E-DCH link from the preconfigured parameter, and hand over the uplink serving cell from a serving cell to a target cell according to the configuration parameter of the uplink E-DCH link.

When UE moves between cells, a case in which the UE moves from a small cell to a macro cell may occur, or a case in which the UE moves from a macro cell to a small cell may occur. The method provided in this embodiment of the present invention is applicable to both cases, and the cases are separately described below.

Case 1: The UE is to move from a small cell to a macro cell. In this case, a target cell is the macro cell, and a serving cell is the small cell.

When the UE is to move from the small cell to the macro cell, the UE reports a 1A event to the RNC. In this case, the RNC determines that a link needs to be set up in the macro cell for the UE. The RNC delivers a link setup request message to the macro cell, where the link setup request message carries a preconfigured parameter used for subsequent handover and a parameter used for a currently set-up link (where the set-up link is referred to as a non-serving E-DCH link).

Optionally, the link setup request message carries a first operation indicator, where the first operation indicator is used to indicate that subsequent handover is handover of only an uplink serving cell, or handover of only a downlink serving cell, or handover of both uplink and downlink serving cells according to a preconfigured parameter. The first operation indicator may be included in a radio link setup request, a radio link addition request, a synchronization radio link reconfiguration request, or a non-synchronization radio link reconfiguration request message.

After the RNC receives a response message that is returned by the macro cell and that represents that link setup is completed, the RNC delivers an active set update message to the UE, where the active set update message carries a first operation indicator and a preconfigured parameter. The first operation indicator is used to instruct the UE to perform, according to the preconfigured parameter, when rapid serving cell handover is performed subsequently, handover of only the uplink serving cell or handover of only the downlink serving cell, or handover of both the uplink and downlink serving cells. In this embodiment of the present invention, the rapid serving cell handover is cell handover.

The active set update message further carries a preconfigured parameter, where the preconfigured parameter includes a configuration parameter used by the UE to configure an HS-DSCH link and/or an E-DCH link. Specifically, in a process of cell handover, handover of the downlink serving cell is mainly involved. Therefore, a configuration parameter of the HS-DSCH link needs to be configured in the preconfigured parameter, and a configuration parameter of the E-DCH link may be optionally configured. Optionally, if the first operation indicator requires the UE to hand over only the downlink serving cell, the preconfigured parameter may carry only the configuration parameter for configuring the HS-DSCH link, but not carry the configuration parameter for configuring the E-DCH link.

It should be noted herein that the configuration parameter of the HS-DSCH link may be serving HS-DSCH cell information, including one or a combination of the following information: HARQ-related information, a primary scrambling code, a downlink high speed physical downlink shared channel (English: High Speed Physical Downlink Shared Channel, HS-PDSCH for short) information, or a serving cell change message type. The configuration parameter of the E-DCH link may include one or a combination of the following information: primary scrambling code information, absolute grant channel E-AGCH information, power offset information of an E-DCH dedicated physical control channel E-DPCCH, a scheduling information power offset, or relative grant channel E-RGCH information.

After the UE obtains the active set update message, the UE reports an active set update completion message to the RNC. Because at this time, cell handover has not been performed, the UE does not use the first operation indicator and the preconfigured parameter temporarily.

When the UE detects that the macro cell is a cell that has the highest signal quality, that is, the UE detects that the signal quality of a macro base station is high enough, the UE reports, to the RNC, a 1D event for triggering cell handover. In this case, the RNC delivers a link reconfiguration message to the macro base station, and the RNC further delivers a link reconfiguration message to a micro base station. The link reconfiguration message delivered by the RNC to the macro base station is used to instruct the macro base station to configure an HS-DSCH link between the macro base station and the UE, and the link reconfiguration message delivered by the RNC to the micro base station is used to instruct the micro base station to disconnect an HS-DSCH link between the micro base station and the UE.

Optionally, the macro base station and the micro base station may perform link reconfiguration according to a previously received first operation indicator and preconfigured parameter. In this way, correspondingly, in the reconfiguration procedure, a corresponding HS-DSCH link parameter may not be carried, and the micro base station may not be instructed to disconnect the HS-DSCH link between the micro base station and the UE.

When the macro base station and the micro base station complete link reconfiguration, both the macro base station and the micro base station return an acknowledgment message to the RNC. In this way, the process of reconfiguration of the macro base station and the micro base station is completed.

After the macro base station completes the configuration, the macro base station delivers a high speed shared control channel order (English: High Speed Shared Control Channel order, HS-SCCH order for short) to the UE, where the order is used to instruct the UE to perform cell handover. After the UE receives the HS-SCCH order, the UE invokes the first operation indicator received in advance from the RNC, where the first operation indicator is used to instruct the UE to hand over only the downlink serving cell, and maintains the configuration parameter of the uplink E-DCH link. When the UE determines that the downlink serving cell needs to be handed over according to the first operation indicator, the UE further invokes the preconfigured parameter received from the RNC, and obtains, from the preconfigured parameter, the configuration parameter used for configuring the downlink HS-DSCH link. The UE reconfigures the HS-DSCH link based on the configuration parameter of the HS-DSCH link, so that link consistency between the UE and the macro base station is achieved. Subsequently, the UE hands over the downlink serving cell to the macro cell that corresponds to the macro base station, that is, the macro cell is used as the downlink serving cell of the UE. Certainly, the small cell is still used as the uplink serving cell of the UE, and configurations corresponding to the uplink serving cell and all related uplinks all remain unchanged.

In the foregoing procedure, after completing the cell handover, the UE also completes uplink/downlink serving cell decoupling, that is, the uplink serving cell is kept in the small cell while the downlink serving cell is handed over to the macro cell, which avoids a complex process in which decoupling is performed after both the uplink and downlink serving cells are handed over to a target cell, reduces information exchange between the RNC and the macro base station, the micro base station, and the UE, and saves network resources.

The technical solution of the present invention is further described below by using a procedure of signaling exchange between the UE and the RNC, the macro base station, and the micro base station. As shown in FIG. 6:
The procedure shown in FIG. 6 is a procedure of information exchange among UE, an LPN, and a macro base station Macro NodeB when the UE moves from a small cell to a macro cell. The procedure of information exchange includes the following steps:
   S601. UE reports, to an RNC, a 1A event in which downlink signal quality of a macro cell exceeds a particular threshold.
   S602. After the RNC instructs a Macro NodeB to complete link setup, the UE receives an active set update message delivered by the RNC, where the active set update message carries a first operation indicator used to instruct the UE to perform cell handover and a preconfigured parameter used for reconfiguring an uplink and/or downlink serving cell.
   S603. The UE returns an active set update completion message to the RNC.
   S604. After the RNC instructs an LPN and the Macro NodeB to complete link reconfiguration, the UE receives an HS-SCCH order delivered by the Macro NodeB, where the HS-SCCH order triggers the UE to perform cell handover.
   S605. The UE invokes the first operation indicator and the preconfigured parameter that are received from the RNC, and according to the first operation indicator and the preconfigured parameter, the UE hands over a downlink serving cell to the Macro NodeB, and an uplink serving cell is still the LPN.
   S606. The UE sends a cell handover completion message to the RNC.

The foregoing procedure is described by using the UE as an execution body. When the UE performs cell handover, cell decoupling is completed at the same time, so that the uplink/downlink serving cell decoupling of the UE is more convenient, thereby improving cell decoupling efficiency.

Further, in this embodiment of the present invention, before step S501, the UE further sends a report of whether a capability for enhanced uplink/downlink serving cell decoupling, or referred to as "a capability for rapid decoupling of an uplink/downlink serving cell", is supported. The capability for enhanced uplink/downlink serving cell decoupling represents that the UE supports separation of the uplink and downlink serving cells in the handover procedure. If the UE supports the capability for enhanced uplink/downlink serving cell decoupling, the UE further reports, to the radio network controller RNC, a message of supporting the capability for enhanced uplink/downlink serving cell decoupling. Therefore, before S501 is performed, the RNC determines, according to the message reported by the UE, whether the UE performs downlink serving cell handover and uplink/downlink serving cell decoupling. The message of the capability may be reported to the RNC when the UE sets up a radio resource control (English: Radio Resource Control, RRC for short) connection. This avoids a problem of incorrect handover by the UE because the RNC performs enhanced handover procedure configuration on the UE that does not support the capability for enhanced uplink/downlink serving cell decoupling.

Further, in this embodiment of the present invention, after S503 is performed, after rapid cell handover is completed, the uplink serving cell remains unchanged, that is, in an uplink/downlink serving cell decoupling state, and if the network side triggers handover of the uplink serving cell back to the macro cell, a corresponding reconfiguration message, such as a radio bearer reconfiguration message, a transport channel reconfiguration message, a physical channel reconfiguration message, or a radio link reconfiguration request message, may comprised a second operation indicator, where the second operation indicator is used to instruct the UE to hand over the uplink serving cell to the macro cell. The UE obtains the second operation indicator from the reconfiguration message. In this scenario, the second operation indicator indicates that only the uplink serving cell of the UE is to be handed over.

If the UE adds a configuration parameter of an uplink E-DCH link to the preconfigured parameter, the UE obtains the configuration parameter of the E-DCH link. Finally, according to the second operation indicator, the UE reconfigures the E-DCH link according to the configuration parameter of the uplink E-DCH link in the preconfigured parameter, to hand over the uplink serving cell to the macro cell. In this way, the RNC does not need to add, to a corresponding reconfiguration message, a configuration parameter of the E-DCH link that is the same as a preconfigured parameter, thereby reducing signaling overheads.

Case 2: The UE is to move from a macro cell to a small cell. In this case, a target cell is the small cell, and a current cell is the macro cell.

In the procedure of case 1, a process of interaction between the UE and the RNC, the micro base station, and the macro base station when the UE moves from the small cell to the macro cell. Certainly, the method shown in FIG. 5 may further be applied to a process in which the UE moves from the macro cell to the small cell.

It should be noted herein that, to move the UE from the small cell to the macro cell is to directly perform cell handover, and complete downlink serving cell handover and decoupling process at the same time. To move the UE from the macro cell to the small cell is to perform cell decoupling first and then perform downlink serving cell handover.

Therefore, when the UE is to move from the macro cell to the small cell, the UE first performs uplink/downlink serving cell decoupling and then performs downlink serving cell handover. A specific process is as follows:
The decoupling process:
   First, the UE reports a 1A event of the small cell to the RNC, and the RNC determines that a link needs to be added to the small cell for the UE. Therefore, the RNC delivers a link setup request message to the micro base station, where the link setup request message is used to instruct the micro base station to set up a link between the micro base station and the UE. After the micro base station completes the setup of the link between the micro base station and the UE, the macro base station returns a link setup completion response message to the RNC. In the process of setting up a radio link, the RNC may configure a preconfigured parameter of the micro base station, where the preconfigured parameter may include a configuration parameter of an HS-DSCH link and/or an E-DCH link. The preconfigured parameter may be used in a subsequent uplink/downlink serving cell decoupling process, or a downlink serving cell handover process after a decoupling process. In this case, the micro base station may be indicated, by using an added first operation indicator, that in the subsequent uplink/downlink serving cell decoupling process or the subsequent downlink serving cell handover process, only an uplink serving cell is to be handed over, or only a downlink serving cell is to be handed over, or both an uplink serving cell and a downlink serving cell are to be handed over.

Optionally, the uplink/downlink serving cell decoupling process may further be performed by using a radio link setup process. In this case, in the process, a link of the UE in the small cell may be set up as a serving E-DCH link, but the HS-DSCH link parameter is not configured. In this case, a first operation indicator may further be carried, where the first operation indicator is used to instruct the UE to configure, according to the preconfigured parameter in a subsequently performed serving cell handover process, the link of the UE in the small cell as a serving HS-DSCH link, and the parameter of the serving E-DCH link remains unchanged.

The UE receives an active set update message delivered by the RNC, where the active set update message is used to instruct the UE to determine a condition for cell handover. The active set update message further carries a preconfigured parameter and optionally carries a first operation indicator, where the preconfigured parameter includes a configuration parameter used for configuring an uplink E-DCH link and/or a configuration parameter used for configuring a downlink HS-DSCH link. The first operation indicator carried in the active set update message is used to instruct the UE to perform uplink serving cell handover or downlink serving cell handover. After receiving the preconfigured parameter and the first operation indicator, the UE temporarily saves the preconfigured parameter and the first operation indicator.

After the UE completes the active set update, the UE returns an active set update response message to the RNC. After the UE completes the active set update, if the link of the UE in the small cell satisfies a particular condition, and in this case, the UE is not in an uplink/downlink serving cell decoupling state, the RNC delivers a link reconfiguration message to the macro base station and the micro base station. The macro base station and the micro base station perform link reconfiguration according to the link reconfiguration message delivered by the RNC, that is, a link between the macro base station and the UE is configured and referred to as a non-serving E-DCH link, and a link between the micro base station and the UE is configured as a serving E-DCH link. In this case, the serving E-DCH link and the serving HS-DSCH link of the UE are in different cells. After the macro base station and the micro base station complete the link reconfiguration, the macro base station and the micro base station return link reconfiguration completion response messages to the RNC. In this case, an uplink/downlink serving cell decoupling configuration of the UE on an Iub interface and an Iur interface is completed.

After obtaining the response messages returned by the macro base station and the micro base station, the UE receives the link reconfiguration message delivered by the RNC. The message carries a first operation indicator, where the first operation indicator is used to instruct the UE to hand over only the downlink serving cell in the subsequent serving cell handover procedure performed after the decoupling, and an E-DCH radio link related parameter does not change. The UE performs an operation according to the link reconfiguration message, where the link reconfiguration message includes a new configuration parameter of an E-DCH link. The UE hands over the uplink serving cell to the small cell according to the new E-DCH link configuration parameter, and changes the link in the macro cell into a non-serving E-DCH link. After the E-DCH link configuration is completed, the uplink serving cell of the UE is correspondingly handed over to the small cell, and the downlink serving cell is still the original macro cell. In this way, uplink/downlink serving cell decoupling of the UE is completed.

Optionally, if the preconfigured parameter previously obtained by the UE from the active set update message includes the configuration parameter of the E-DCH link, in this case, the UE performs reconfiguration according to the E-DCH link parameter in the reconfiguration message, and ignores the related parameter in the preconfigured parameter. Alternatively, the UE ignores the related E-DCH link parameter in the preconfigured parameter according to the first operation indicator obtained from the reconfiguration message.

A serving cell handover procedure:
After the UE completes uplink/downlink serving cell decoupling, if the UE detects that the small cell becomes the cell that has the highest quality, the UE reports, to the RNC, a triggering event 1D event used to trigger cell handover. Briefly, the UE reports, to the RNC, that the downlink serving cell needs to be handed over.

When the RNC receives the triggering event sent by the UE, the RNC delivers a link reconfiguration message to the micro base station and the macro base station. Certainly, the link reconfiguration message delivered by the RNC to the macro base station is used to instruct the macro base station to disconnect an HS-DSCH link between the macro base station and the UE, and the link reconfiguration message delivered by the RNC to the micro base station is used to instruct the micro base station to set up an HS-DSCH link between the micro base station and the UE.

Optionally, the macro base station and the micro base station may use the HS-DSCH link parameter in the preconfigured parameter according to the previously received first operation indicator, and may change the macro base station into a non-serving HS-DSCH cell of the UE, hand over the micro base station to a serving HS-DSCH cell of the UE, and keep the configuration parameter of the E-DCH link unchanged.

After the RNC receives response messages that are returned by the macro base station and the micro base station and that represent that the link reconfiguration is completed, a method for performing cell handover is still performed according to S501 and S502. That is, when the UE detects a handover instruction that is sent by the small cell and that is used to instruct the UE to perform cell handover, the handover instruction herein is an HS-SCCH order delivered by the micro base station and instructs the UE to perform serving cell handover, or the macro cell may send a reconfiguration request message to the UE to require the UE to perform serving cell handover.

After the UE receives the HS-SCCH order, the UE performs HS-DSCH link reconfiguration according to the stored first operation indicator and according to the configuration parameter of the HS-DSCH link obtained from the preconfigured parameter. After the HS-DSCH link reconfiguration is completed, the downlink serving cell of the UE is handed over to the small cell. In this case, both the uplink serving cell and the downlink serving cell are small cells. In this way, downlink serving cell handover is completed, and finally, the UE reports a cell handover completion message to the RNC.

It should be noted herein that the foregoing operation indicator is not carried in the active set update message, but carried in the link reconfiguration request message delivered by the RNC to the UE. Certainly, in an actual application scenario, the operation indicator may be selectively carried in the active set update message.

In this way, the entire handover process is completed.

In the foregoing handover process, the UE directly performs downlink or uplink serving cell handover according to the first operation indicator, and does not reconfigure the E-DCH link parameter in the handover procedure after uplink/downlink serving cell decoupling is performed. In this way, complex processing steps of the cell handover procedure are avoided, and configuration signaling overheads are also reduced, thereby improving cell decoupling efficiency.

Further, after a serving cell handover pre-configuration procedure is completed, that is, after the UE reports a 1A event, the RNC may deliver a first operation indicator to the base station and the UE, where the first operation indicator is used to indicate that only the downlink serving cell is to be handed over in a subsequent enhanced handover process, and the preconfigured parameter includes the E-DCH link parameter and the HS-DSCH link parameter. When uplink/downlink serving cell decoupling is performed, the RNC delivers again a link reconfiguration message to the UE or the base station, where the link reconfiguration message carries a second operation indicator, and the second operation indicator is used to instruct the UE to hand over only the uplink serving cell in this reconfiguration process and configure the E-DCH link by using the configuration parameter of the E-DCH link in the preconfigured parameter. Finally, the uplink serving cell is handed over to the target cell. In this way, the configuration parameter of the E-DCH link does not need to be carried in the reconfiguration message, and only an indicator is sent, which reduces network overheads, and improves cell decoupling efficiency.

Further, after a serving cell handover pre-configuration procedure is completed, that is, after the UE reports a 1A event, the RNC may deliver a first operation indicator to the base station and the UE, where the first operation indicator is used to indicate that only the uplink serving cell is to be handed over in a subsequent uplink/downlink serving cell handover process, and the preconfigured parameter includes the E-DCH link parameter and the HS-DSCH link parameter. When uplink/downlink serving cell decoupling is performed, the RNC delivers again a link reconfiguration message to the UE or the base station, where the link reconfiguration message carries a second operation indicator, and the second operation indicator is used to instruct the UE to hand over only the uplink serving cell in the serving cell handover procedure after the decoupling and configure the E-DCH link by using the configuration parameter of the E-DCH link in the preconfigured parameter. Finally, the uplink serving cell is handed over to the target cell. In this way, the configuration parameter of the E-DCH link does not need to be carried in the reconfiguration message, and only an indicator is sent, which reduces network overheads, and improves cell decoupling efficiency.

Moreover, when the preconfigured parameter does not include the configuration parameter used for configuring the E-DCH link, in the reconfiguration procedure in the uplink/downlink serving cell decoupling process, the RNC needs to configure a new E-DCH link parameter for the UE and the base station, so that the uplink serving cell is handed over to the target cell, and the downlink serving cell still remains in the original cell. In addition, the RNC adds an operation indicator in a pre-configuration procedure or the reconfiguration procedure used for the uplink/downlink serving cell decoupling procedure, where the operation indicator is used for the UE to hand over only the downlink serving cell, that is, configure, in the serving cell handover procedure, a related link according to the configuration parameter that is used for configuring the HS-DSCH link and that is included in the preconfigured parameter, so that the downlink serving cell of the UE is handed over to the target cell, and an original configuration is still maintained for the uplink serving cell, that is, the uplink serving cell is still kept in the target cell after the decoupling.

Further, in this embodiment of the present invention, to ensure that the UE can correctly perform the uplink/downlink serving cell decoupling and serving cell handover processes, the UE further sends a report of whether a capability for uplink/downlink serving cell decoupling, or referred to as "a capability for rapid decoupling of an uplink/downlink serving cell", is supported. The capability represents that the UE supports separation of the uplink and downlink serving cells in the cell handover procedure. The UE further reports, to the radio network controller (English: Radio Network Controller, RNC for short), a message of supporting capability for uplink/downlink serving cell decoupling. Therefore, before a first step is performed, the RNC configures, according to the message of the capability reported by the UE, that the UE performs downlink serving cell handover and uplink/downlink serving cell decoupling, where the message of the capability may be reported to the RNC when the UE sets up a radio resource control (English: Radio Resource Control, Chinese: RRC) connection. This avoids a problem of incorrect handover by the UE because the RNC performs enhanced handover procedure configuration on the UE that does not support the capability.

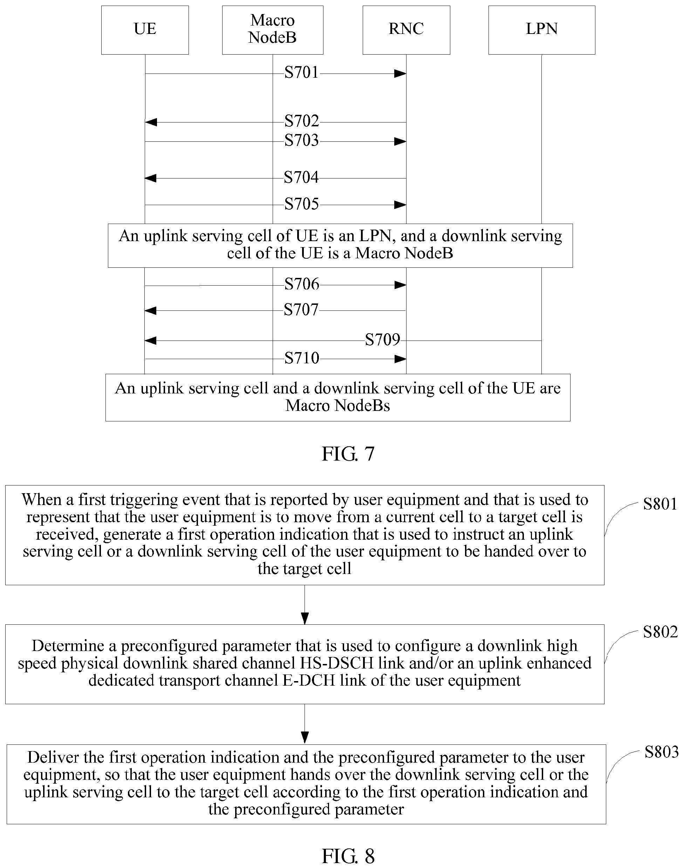

As shown in FIG. 7, the second case is further described by using a flowchart of communication between UE and an RNC, an LPN, and a Macro NodeB:
S701. UE reports, to an RNC, an event in which the UE moves from a macro cell to a small cell.
S702. The UE receives an active set update message delivered by the RNC, where the active set update message carries a first operation indicator and a preconfigured parameter, the active set update message is used to instruct the UE to determine a condition for cell handover, and the first operation indicator is used to instruct the UE to hand over an uplink serving cell to the small cell.
S703. The UE returns an active set update completion response message to the RNC.
S704. After the RNC instructs an LPN and a Macro NodeB to implement link reconfiguration, the UE receives a link reconfiguration message delivered by the RNC, where the link reconfiguration message is used to instruct the UE to reconfigure an E-DCH link and perform cell handover.
S705. The UE reconfigures the E-DCH link according to a configuration parameter of the E-DCH link in the preconfigured parameter, and hands over the uplink serving cell to the small cell according to the first operation indicator.

By means of the foregoing S701 to S705, the UE completes decoupling of the uplink serving cell and a downlink serving cell. Certainly, after the decoupling, the UE further performs serving cell handover. A handover procedure is as follows:
S706. When the UE detects that signal quality of the small cell is greater than or equal to a threshold, the UE reports, to the RNC, an event for triggering cell handover.
S707. The UE receives an active set update message delivered again by the UNC, where the active set update message carries a second operation indicator, and the second operation indicator is used to instruct the UE to hand over the downlink serving cell to the LPN.
S708. The UE returns an active set update completion message to the RNC.
S709. After the RNC instructs the LPN and the Macro NodeB to complete link reconfiguration again, the UE receives an HS-SCCH order delivered by the LPN, where the HS-SCCH order is used to instruct the UE to perform serving cell handover.
S710. The UE hands over the downlink serving cell to the LPN according to the second operation indicator.

By means of S706 to S710, the UE completes the process of serving cell handover. In the foregoing handover process, the UE does not need to perform serving cell decoupling after the UE hands over the uplink serving cell and the downlink serving cell to the small cell, thereby reducing a step of serving cell decoupling, and further improving serving cell decoupling efficiency.

### Embodiment 2

In this embodiment of the present invention, a cell handover method is further provided. FIG. 8 is a flowchart of a cell handover method according to this embodiment of the present invention. The method includes:
S801. When a first triggering event that is reported by user equipment and that is used to represent that the user equipment is to move from a current cell to a target cell is received, generate a first operation indicator that is used to instruct an uplink serving cell or a downlink serving cell of the user equipment to be handed over to the target cell.
S802. Determine a preconfigured parameter that is used to configure a downlink high speed physical downlink shared channel HS-DSCH link and/or an uplink enhanced dedicated transport channel E-DCH link of the user equipment.
S803. Deliver the first operation indicator and the preconfigured parameter to the user equipment, so that the user equipment hands over the downlink serving cell or the uplink serving cell to the target cell according to the first operation indicator and the preconfigured parameter.
Still two cases in which the UE is to move from a small cell to a macro cell and the UE is to move from a macro cell to a small cell are described below.

Case 1: The UE is to move from a small cell to a macro cell. In this case, a target cell is the macro cell, and a current cell is the small cell.

In a process in which the UE moves from the small cell to the macro cell, the UE reports the event to the RNC. In this case, the RNC determines, based on the event reported by the UE, that a link needs to be added to the target cell for the UE, and the link to be added to the target cell may be an E-DCH link or an HS-DSCH link.

When the RNC determines that a link needs to be added to the macro cell, the RNC delivers a link setup request message to the target cell, where the link setup request message carries a preconfigured parameter used for subsequent handover and a parameter for currently setting up a link, for example, setting up a link referred to as a non-serving E-DCH link.

Optionally, the link setup request message carries a first operation indicator, where the first operation indicator is used to indicate that subsequent handover is handover of only an uplink serving cell, or handover of only a downlink serving cell, or handover of both uplink and downlink serving cells according to a preconfigured parameter. The first operation indicator may be included in a radio link setup request, a radio link addition request, a synchronization radio link reconfiguration request, or a non-synchronization radio link reconfiguration request message.

The link setup request message may further carry a reconfiguration parameter that includes a configuration parameter used by the target cell to configure an E-DCH link and an HS-DSCH link. The macro cell may configure an E-DCH link between the macro cell and the UE by using the configuration parameter of the E-DCH link, and may configure an HS-DSCH link between the macro cell and the UE by using the configuration parameter of the HS-DSCH link. The macro cell temporarily does not use the reconfiguration parameter. The reconfiguration parameter is used only when the macro cell knows that the UE needs to perform cell handover.

When the RNC receives a link setup completion message returned by a macro base station corresponding to the macro cell, the RNC delivers an active set update procedure message to the UE. To enable the UE to determine whether a serving cell that needs to be handed over is the uplink serving cell or the downlink serving cell, the RNC adds a first operation indicator to an active set update message delivered to the UE, where the first operation indicator is used to instruct the UE to hand over only the uplink serving cell, or hand over only the downlink serving cell, or hand over both the uplink serving cell and the downlink serving cell according to the preconfigured parameter when subsequent rapid serving cell handover is performed.

In addition, the active set update message further carries a preconfigured parameter, where the preconfigured parameter includes a configuration parameter used for configuring an HS-DSCH link and/or an E-DCH link of the UE. After the UE obtains the first operation indicator and the preconfigured parameter, the UE temporarily saves the first operation indicator and the preconfigured parameter.

When the UE detects that the macro cell is a cell that has the highest signal quality, the UE reports, to the RNC, an event for triggering cell handover, and the UE notifies, by using the triggering event, the RNC that handover of the downlink serving cell needs to be performed. In this case, the RNC delivers a link reconfiguration message to the macro base station. After the macro base station receives the reconfiguration message, the macro base station obtains, from a reconfiguration parameter, a configuration parameter used for configuring an HS-DSCH link between the macro base station and the UE, so that the macro base station can configure the HS-DSCH link between the macro base station and to the UE successfully.

In addition, the RNC further delivers a link reconfiguration message to a micro base station. After receiving the link reconfiguration message, the micro base station disconnects the HS-DSCH link between the micro base station and the UE.

After the macro base station and the micro base station complete link reconfiguration, the RNC may selectively deliver a link reconfiguration instruction to the UE, where the link reconfiguration instruction is used to instruct the UE to perform link reconfiguration, that is, the UE configures the HS-DSCH link between the UE and the macro base station. Certainly, the RNC may choose not to deliver the link reconfiguration instruction, because when the macro base station delivers a cell handover indicator to the UE, the UE also performs link reconfiguration.

Certainly, after the UE receives the cell handover indicator delivered by the macro base station, the UE invokes the first operation indicator received in advance from the RNC, where the first operation indicator is used to instruct the UE to hand over only the downlink serving cell, and maintains the configuration parameter of the uplink E-DCH link. When the UE determines that the downlink serving cell needs to be handed over according to the first operation indicator, the UE further invokes the preconfigured parameter received from the RNC, and obtains, from the preconfigured parameter, the configuration parameter used for configuring the downlink HS-DSCH link. The UE reconfigures the HS-DSCH link based on the configuration parameter of the HS-DSCH link, so that link consistency between the UE and the macro base station is achieved. Subsequently, the UE hands over the downlink serving cell to the macro cell that corresponds to the macro base station. Certainly, the uplink serving cell is still kept in the original small cell, and configurations corresponding to the uplink serving cell and all related uplinks all remain unchanged.

It can be clearly seen from the foregoing embodiment that, when the UE is to move from the small cell to the macro cell, the UE no longer needs to first hand over both the uplink serving cell and the downlink serving cell to the macro cell, and then perform a decoupling process of handing over the uplink serving cell or the downlink serving cell back to the small cell. Instead, the RNC delivers a first operation indicator to the UE to instruct the UE to hand over the uplink serving cell or handover of the downlink serving cell, so that a cell that needs to be handed over can be separately and directly handed over to the target cell, which further avoids a complex process of cell decoupling, and improves cell decoupling efficiency.

Further, in this embodiment of the present invention, before serving cell handover is performed, the RNC determines whether a report sent by the UE is received, where the report is of whether a capability for uplink/downlink serving cell decoupling, or referred to as "a capability for rapid decoupling of an uplink/downlink serving cell", is supported. Capability for uplink/downlink serving cell decoupling represents that the UE supports separation of the uplink and downlink serving cells in the handover procedure. If the UE supports capability for uplink/downlink serving cell decoupling, the UE further reports, to the radio network controller RNC, a message of supporting capability for uplink/downlink serving cell decoupling. Therefore, before S801 is performed, the RNC determines, according to the message reported by the UE, whether the UE performs downlink serving cell handover and uplink/downlink serving cell decoupling. The message of the capability may be reported to the RNC when the UE sets up a radio resource control (English: Radio Resource Control, RRC for short) connection. This avoids a problem of incorrect handover by the UE because the RNC performs enhanced handover procedure configuration on the UE that does not support the capability for enhanced uplink/downlink serving cell decoupling.

Certainly, after rapid cell handover is completed, the uplink serving cell remains unchanged, that is, in an uplink/downlink serving cell decoupling state, and if the network side triggers handover of the uplink serving cell back to the macro cell, a reconfiguration message, such as a radio bearer reconfiguration message, a transport channel reconfiguration message, a physical channel reconfiguration message, or a radio link reconfiguration request message, that is delivered to the UE, carries a second operation indicator, where the second operation indicator is used to instruct the UE to hand over the uplink serving cell to the macro cell. The second operation indicator indicates that only the uplink serving cell of the UE is to be handed over, and the UE obtains the second operation indicator from the reconfiguration message.

If the UE adds a configuration parameter of an uplink E-DCH link to the preconfigured parameter, the UE obtains the configuration parameter of the E-DCH link. Finally, according to the second operation indicator, the UE reconfigures the E-DCH link according to the configuration parameter of the uplink E-DCH link in the preconfigured parameter, to hand over the uplink serving cell to the macro cell. In this way, the RNC does not need to add, to a corresponding reconfiguration message, a configuration parameter of the E-DCH link that is the same as a preconfigured parameter, thereby reducing signaling overheads.

Case 2: The UE is to move from a macro cell to a small cell. In this case, a target cell is the small cell, and a serving cell is the macro cell.

In case 1, the UE needs to perform cell handover only once to complete cell decoupling at the same time. However, in case 2, the UE needs to perform cell decoupling first, and then can perform cell handover.

The decoupling process:
The process of cell decoupling also takes place after the UE reports an event of moving from the macro cell to the small cell. An execution procedure of the RNC is basically the same as the procedure of cell handover in case 1, only that the small cell does not deliver a cell handover instruction to the UE to trigger the UE to perform serving cell handover, but the RNC delivers a link reconfiguration message to the UE to trigger the UE to perform serving cell handover. Certainly, the RNC still delivers the first operation indicator and the preconfigured parameter to the UE before performing serving cell handover. In this case, the first operation indicator is used to instruct the UE to hand over the uplink serving cell to the small cell, and the downlink serving cell remains unchanged.

The UE first delivers a link setup request message to a micro base station, where the link setup request message is used to instruct the micro base station to set up a link between the micro base station and the UE. After the micro base station completes the setup of the link between the micro base station and the UE, a macro base station returns a link setup completion response message to the RNC. In the process of setting up a radio link, the RNC may configure a preconfigured parameter of the micro base station, where the preconfigured parameter may include a configuration parameter of an HS-DSCH link and/or an E-DCH link. The preconfigured parameter may be used in a subsequent uplink/downlink serving cell decoupling process, or a downlink serving cell handover process after a decoupling process. In this case, the micro base station may be indicated, by using an added first operation indicator, that in the subsequent uplink/downlink serving cell decoupling process or the subsequent downlink serving cell handover process, only an uplink serving cell is to be handed over, or only a downlink serving cell is to be handed over, or both an uplink serving cell and a downlink serving cell are to be handed over.

After the micro base station and the macro base station complete link configuration, the RNC delivers a link reconfiguration message to the UE. After the UE receives the link reconfiguration message delivered by the RNC, the UE hands over the uplink serving cell of the UE to the small cell according to the first operation indicator and the configuration parameter of the E-DCH link in the preconfigured parameter, and the downlink serving cell is still the macro cell.

Certainly, after the UE completes serving cell decoupling, if the UE detects that signal quality of the small cell is the highest, the UE reports, to the RNC, an event for triggering serving cell handover. In this case, the RNC delivers an active set update message to the UE, where the active set update message carries a second operation indicator, and the second operation indicator is used to instruct the UE to hand over the downlink serving cell to the small cell.

When the RNC receives the triggering event reported by the UE, the RNC delivers again a link reconfiguration message to the micro base station and the macro base station. In this case, the reconfiguration message delivered to the micro base station is used to instruct the micro base station to configure an HS-DSCH link between the micro base station and the UE, and the reconfiguration message delivered to the macro base station is used to instruct the macro base station to disconnect an HS-DSCH link between the macro base station and the UE.

When the micro base station configures the HS-DSCH link between the micro base station and the UE, and the macro base station disconnects the HS-DSCH link between the macro base station and the UE, the micro base station delivers an HS-SCCH order to the UE, where the HS-SCCH order is used to instruct the UE to perform cell handover. In this case, the UE hands over the downlink serving cell to the small cell based on the second operation indicator. In this way, in the handover process, the UE no longer needs to first hand over both the uplink serving cell and the downlink serving cell to the small cell, and then perform cell decoupling, thereby reducing a step of cell decoupling, and improving cell decoupling efficiency.

### Embodiment 3

The method in Embodiment 2 of the present invention may further be applied to a dual-frequency technology. The dual-frequency technology refers to a technology in which UE may perform high speed uplink packet access (English: High Speed Uplink packet access, HSUPA for short) in two frequencies. The dual-frequency technology is referred to as Dual Cell E-DCH, or referred to as DC-HSUPA. That is, the UE sends uplink data in two active frequencies, where one frequency is a primary frequency (primary frequency), and the primary frequency may include a primary uplink frequency (English: primary uplink frequency) and a primary downlink frequency (English: primary downlink frequency). Certainly, the UE performs uplink sending on the primary uplink frequency, and performs downlink receiving on the primary downlink frequency.

The other frequency is a secondary frequency (secondary frequency), and the secondary frequency includes a secondary uplink frequency (English: secondary uplink frequency) and a secondary downlink frequency (English: secondary downlink frequency). The UE has one uplink serving cell or link and one downlink serving cell or link on each frequency. Certainly, there may further exist several non-uplink serving cells or links. The uplink serving cell may schedule data transmission of the UE by sending an absolute grant channel E-AGCH.

Generally, before the UE performs uplink/downlink serving cell decoupling, the uplink serving cell and the downlink serving cell of the UE are located in a same cell. An RNC may configure, on a Uu interface, an uplink configuration parameter and a downlink configuration parameter of a related cell on the frequency of the UE, and the RNC may configure, on an Iub interface, an uplink/downlink configuration parameter related to a base station.

Currently, when a configuration parameter of an uplink E-DCH link on the primary frequency is configured, the RNC may deliver an indicator of an uplink serving cell like a serving E-DCH RL indicator to indicate that a link or Primary common pilot channel (English: Common Pilot Channel, CPICH for short) information is a serving uplink E-DCH link. The CPICH information may include a primary scrambling code (English: primary scrambling code, PSC for short). One cell has one primary scrambling code. A cell corresponding to the uplink E-DCH link is an uplink serving cell. In addition, the RNC may deliver an indicator of a downlink serving cell like a serving HS-DSCH RL indicator to indicate that a link is a downlink HS-DSCH link, and a cell corresponding to the downlink HS-DSCH link is a downlink serving cell.

Because there is only one downlink serving cell, when the RNC delivers the configuration parameter of the uplink E-DCH link on the secondary frequency, an indicator for configuring the uplink serving cell or the uplink E-DCH link on the secondary frequency is not carried, but instead, a cell corresponding to a configured downlink serving cell or downlink HS-DSCH link is used as an uplink serving cell.

However, after the uplink/downlink serving cell decoupling, uplink serving cells of two frequencies after the decoupling need to be in a same base station. One base station may control multiple cells, and the UE may establish multiple links in one base station. Therefore, currently, the uplink serving cell on the secondary frequency after the decoupling cannot be indicated to the UE, the base station, and the RNC, which may cause a configuration error, and affects data delivering of the UE on the secondary frequency.

To avoid the foregoing problem, this embodiment of the present invention provides a method for indicating a cell. The method includes: obtaining an indicator of an uplink serving cell on a secondary frequency that is sent by a radio network controller RNC, where the indicator of the uplink serving cell includes one or a combination of the following information: an indicator of an uplink serving link on the secondary frequency, a scrambling code of an uplink serving cell on the secondary frequency, or cell timing reference configuration information of a primary frequency and cell timing reference configuration information of the secondary frequency; and
determining that a link indicated by the indicator of the uplink serving link is the uplink serving link on the secondary frequency, if the indicator of the uplink serving cell includes an indicator of an uplink serving link on the secondary frequency, or determining that a link that includes the scrambling code of the uplink serving cell is the uplink serving link on the secondary frequency, if the scrambling code of the uplink serving cell on the secondary frequency is received.

Specifically, in this embodiment of the present invention, an indicator of an uplink serving cell is added to a message (which may be a message such as a radio bearer reconfiguration message, a transport channel reconfiguration message, a physical channel reconfiguration message, a radio link reconfiguration request message, a cell update acknowledgment message, or an active set update message) sent on the Uu interface, where the indicator includes an indicator of a serving E-DCH cell or link on the secondary frequency; or includes Primary CPICH information or scrambling code information of the cell; or the indicator may be information about an existing piece of information element E-AGCH. It is determined that a cell or a link is an uplink serving cell or an uplink E-DCH link by determining that E-AGCH information is configured in the cell or the link. That is, in this case, this indicator does not need to be additionally added, but determining is performed implicitly by using an existing information element. Alternatively, the UE determines, by determining that timing reference information of the uplink serving cell on the secondary frequency is the same as timing reference information of an uplink serving cell on the primary frequency, that the uplink serving cell on the secondary frequency is a serving E-DCH cell on the secondary frequency, where timing reference information may be timing configuration information of an F-DPCH.

Therefore, when the RNC delivers the configuration parameter of the uplink E-DCH link to the UE, the configuration parameter comprises an indicator of an uplink serving cell, so that the UE can determine an uplink serving cell or an uplink serving link on the secondary frequency according to the indicator of the uplink serving cell. Similarly, the indicator of the uplink serving cell may also be carried in a related message on an Iub or Iur interface, where the related message herein may be a message such as a radio bearer reconfiguration message, a transport channel reconfiguration message, a physical channel reconfiguration message, or a radio link reconfiguration request message. Finally, the RNC can indicate the uplink serving cell or the uplink to the UE or the base station after the decoupling, thereby avoiding a configuration error.

In practice, in this embodiment, an indicator is added to a message delivered on a Uu interface, and an uplink serving cell or a serving E-DCH link on a secondary frequency may be determined according to the indicator, thereby avoiding that data delivering of UE is affected because an uplink serving cell on the secondary frequency cannot be determined.

### Embodiment 4

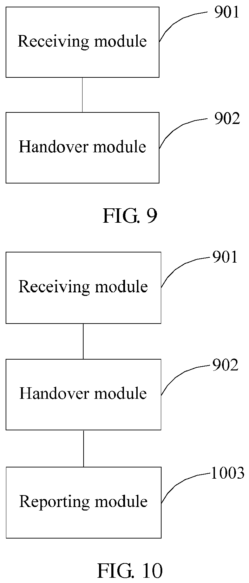

Corresponding to the cell handover method in Embodiment 1, this embodiment of the present invention further provides a cell handover apparatus. FIG. 9 is a schematic structural diagram of a cell handover apparatus according to this embodiment of the present invention. The apparatus includes:
a receiving module 901, configured to receive a first operation indicator and a preconfigured parameter that are sent by a radio network controller RNC; and
a handover module 902, configured to: when the first operation indicator is used to instruct to hand over only a downlink serving cell, obtain a configuration parameter of a downlink high speed physical downlink shared channel HS-DSCH link from the preconfigured parameter, and according to the configuration parameter of the downlink HS-DSCH link, hand over the downlink serving cell from a serving cell to a target cell and keep an uplink serving cell in the serving cell; or when the first operation indicator is used to instruct to hand over only an uplink serving cell, obtain a configuration parameter of an uplink enhanced dedicated transport channel E-DCH link from the preconfigured parameter, and hand over the uplink serving cell from a serving cell to a target cell according to the configuration parameter of the uplink E-DCH link.

Further, the receiving module 901 is specifically configured to: when an active set update message delivered by the RNC is received, obtain the first operation indicator and the preconfigured parameter from the active set update message, where the configuration parameter of the downlink high speed physical downlink shared channel HS-DSCH link and/or the configuration parameter of the uplink enhanced dedicated transport channel E-DCH link are configured in the preconfigured parameter.

Further, the receiving module 901 is further configured to receive a handover instruction or message that is sent by a target base station that corresponds to the target cell or by the RNC and that is used to instruct user equipment to perform serving cell handover.

The handover module 902 is further configured to hand over the downlink serving cell to the target cell according to the received first operation indicator and the configuration parameter of the downlink HS-DSCH link that is included in the preconfigured parameter, where the configuration parameter of the uplink E-DCH link remains unchanged.

Further, the receiving module 901 is further configured to receive a reconfiguration message sent by the RNC.

The handover module 902 is further configured to: obtain, from the reconfiguration message, a second operation indicator that is used to instruct to hand over the uplink serving cell to the target cell; and if a configuration parameter of an uplink E-DCH link that is carried in the reconfiguration message is the same as the configuration parameter of the uplink E-DCH link in the preconfigured parameter, hand over the uplink serving cell to the target cell according to the second operation indicator and the configuration parameter of the uplink E-DCH link in the reconfiguration message; or if the reconfiguration message does not carry a configuration parameter of an uplink E-DCH link, hand over the uplink serving cell to the target cell according to the configuration parameter of the uplink E-DCH link in the preconfigured parameter.

Further, the apparatus may further include:
a reporting module 1003 (as shown in FIG. 10), configured to report to the RNC that a capability for enhanced uplink/downlink serving cell decoupling is supported, where the capability for enhanced uplink/downlink serving cell decoupling represents that the user equipment supports a combination of a serving cell handover function and an uplink/downlink serving cell decoupling function.

### Embodiment 5

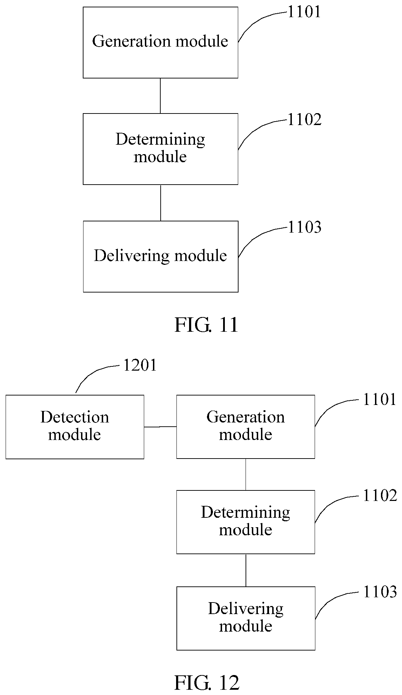

Corresponding to the method in Embodiment 2 of the present invention, this embodiment of the present invention further provides a cell handover control apparatus. FIG. 11 is a schematic structural diagram of the apparatus. The apparatus includes:
a generation module 1101, configured to: when a first triggering event that is reported by user equipment and that is used to represent that the user equipment is to move from a serving cell to a target cell is received, generate a first operation indicator that is used to instruct the user equipment to hand over an uplink serving cell or a downlink serving cell to the target cell;
a determining module 1102, configured to determine a preconfigured parameter that is used to configure a downlink high speed physical downlink shared channel HS-DSCH link and/or an uplink enhanced dedicated transport channel E-DCH link of the user equipment; and
a delivering module 1103, configured to deliver the first operation indicator and the preconfigured parameter to the user equipment, so that the user equipment hands over the downlink serving cell or the uplink serving cell to the target cell according to the first operation indicator and the preconfigured parameter.

Further, the apparatus may further include:
a detection module 1201 (as shown in FIG. 12), configured to detect whether a report, which is sent by the user equipment, of supporting a capability for enhanced uplink/downlink serving cell decoupling is received, where the enhanced uplink/downlink serving cell decoupling represents that the user equipment supports a combination of a serving cell handover function and an uplink/downlink serving cell decoupling function.

### Embodiment 6

This embodiment of the present invention further provides a device. The device includes one or more processors, a memory, and one or more programs, where the one or more programs are stored in the memory, and the one or more processors invoke the one or more programs from the memory and execute the one or more programs.

The one or more programs are configured for performing the following steps:
receiving a first operation indicator and a preconfigured parameter that are sent by a radio network controller RNC; and
when the first operation indicator is used to instruct to hand over only a downlink serving cell, obtaining a configuration parameter of a downlink high speed physical downlink shared channel HS-DSCH link from the preconfigured parameter, and according to the configuration parameter of the downlink HS-DSCH link, handing over the downlink serving cell from a serving cell to a target cell and keeping an uplink serving cell in the serving cell; or
when the first operation indicator is used to instruct to hand over only an uplink serving cell, obtaining a configuration parameter of an uplink enhanced dedicated transport channel E-DCH link from the preconfigured parameter, and handing over the uplink serving cell from a serving cell to a target cell according to the configuration parameter of the uplink E-DCH link.

Further, the one or more programs are further configured for performing the following step:
when an active set update message delivered by the RNC is received, obtaining the first operation indicator and the preconfigured parameter from the active set update message, where the configuration parameter of the downlink high speed physical downlink shared channel HS-DSCH link and/or the configuration parameter of the uplink enhanced dedicated transport channel E-DCH link are configured in the preconfigured parameter.

Further, the one or more programs are further configured for performing the following steps:
receiving a handover instruction or message that is sent by a target base station that corresponds to the target cell or by the RNC and that is used to instruct user equipment to perform serving cell handover; and
handing over the downlink serving cell to the target cell according to the received first operation indicator and the configuration parameter of the downlink HS-DSCH link that is included in the preconfigured parameter, where the configuration parameter of the uplink E-DCH link remains unchanged.

Further, the one or more programs are further configured for performing the following steps:
receiving a reconfiguration message sent by the RNC;
obtaining, from the reconfiguration message, a second operation indicator that is used to instruct to hand over the uplink serving cell to the target cell; and
if a configuration parameter of an uplink E-DCH link that is carried in the reconfiguration message is the same as the configuration parameter of the uplink E-DCH link in the preconfigured parameter, handing over the uplink serving cell to the target cell according to the second operation indicator and the configuration parameter of the uplink E-DCH link in the reconfiguration message; or
if the reconfiguration message does not carry a configuration parameter of an uplink E-DCH link, handing over the uplink serving cell to the target cell according to the configuration parameter of the uplink E-DCH link in the preconfigured parameter.

Further, the one or more programs are further configured for performing the following step:
reporting to the RNC that a capability for enhanced uplink/downlink serving cell decoupling is supported, where the capability for enhanced uplink/downlink serving cell decoupling represents that the user equipment supports a combination of a serving cell handover function and an uplink/downlink serving cell decoupling function.

### Embodiment 7

This embodiment of the present invention further provides a radio network controller. The radio network controller includes one or more processors, a memory, and one or more programs, where the one or more programs are stored in the memory, and the one or more processors invoke the one or more programs from the memory and execute the one or more programs.

The one or more programs are configured for performing the following steps:
when a first triggering event that is reported by user equipment and that is used to represent that the user equipment is to move from a serving cell to a target cell is received, generating a first operation indicator that is used to instruct the user equipment to hand over an uplink serving cell or a downlink serving cell to the target cell;
determining a preconfigured parameter that is used to configure a downlink high speed physical downlink shared channel HS-DSCH link and/or an uplink enhanced dedicated transport channel E-DCH link of the user equipment; and
delivering the first operation indicator and the preconfigured parameter to the user equipment, so that the user equipment hands over the downlink serving cell or the uplink serving cell to the target cell according to the first operation indicator and the preconfigured parameter.

Further, the one or more programs are further configured for performing the following step:
detecting whether a report, which is sent by the user equipment, of supporting a capability for enhanced uplink/downlink serving cell decoupling is received, where the enhanced uplink/downlink serving cell decoupling represents that the user equipment supports a combination of a serving cell handover function and an uplink/downlink serving cell decoupling function.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the exemplary embodiments and all changes and modifications falling within the scope of the present invention.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A cell handover method, comprising:
receiving a first operation indicator and a preconfigured parameter that are sent by a radio network controller RNC; and
when the first operation indicator is used to instruct to hand over only a downlink serving cell, obtaining a configuration parameter of a downlink high speed physical downlink shared channel HS-DSCH link from the preconfigured parameter, and according to the configuration parameter of the downlink HS-DSCH link, handing over the downlink serving cell from a serving cell to a target cell and keeping an uplink serving cell in the serving cell; or
when the first operation indicator is used to instruct to hand over only an uplink serving cell, obtaining a configuration parameter of an uplink enhanced dedicated transport channel E-DCH link from the preconfigured parameter, and handing over the uplink serving cell from a serving cell to a target cell according to the configuration parameter of the uplink E-DCH link.

2. The method according to claim 1, wherein the receiving a first operation indicator and a preconfigured parameter that are sent by a radio network controller RNC comprises:
when an active set update message delivered by the RNC is received, obtaining the first operation indicator and the preconfigured parameter from the active set update message, wherein the configuration parameter of the downlink HS-DSCH link and/or the configuration parameter of the uplink E-DCH link are configured in the preconfigured parameter.

3. The method according to claim 1 or 2, wherein when only the uplink serving cell is to be handed over, after the handover the uplink serving cell from a serving cell to a target cell according to the configuration parameter of the uplink E-DCH link, the method further comprises:
receiving a handover instruction or message that is sent by a target base station that corresponds to the target cell or by the RNC and that is used to instruct user equipment to perform serving cell handover; and
handing over the downlink serving cell to the target cell according to the received first operation indicator and the configuration parameter of the downlink HS-DSCH link that is comprised in the preconfigured parameter, wherein the configuration parameter of the uplink E-DCH link remains unchanged.

4. The method according to claim 1 or 2, wherein when only the downlink serving cell is to be handed over, after the handover the downlink serving cell from a serving cell to a target cell according to the configuration parameter of the downlink HS-DSCH link, the method further comprises:
receiving a reconfiguration message sent by the RNC;
obtaining, from the reconfiguration message, a second operation indicator that is used to instruct to hand over the uplink serving cell to the target cell; and
if a configuration parameter of an uplink E-DCH link that is carried in the reconfiguration message is the same as the configuration parameter of the uplink E-DCH link in the preconfigured parameter, handing over the uplink serving cell to the target cell according to the second operation indicator and the configuration parameter of the uplink E-DCH link in the reconfiguration message; or
if the reconfiguration message does not carry a configuration parameter of an uplink E-DCH link, handing over the uplink serving cell to the target cell according to the configuration parameter of the uplink E-DCH link in the preconfigured parameter.

5. The method according to claims 1 to 4, before the receiving a first operation indicator and a preconfigured parameter that are sent by a radio network controller RNC, further comprising:
reporting to the RNC that a capability for enhanced uplink/downlink serving cell decoupling is supported, wherein the capability for enhanced uplink/downlink serving cell decoupling represents that the user equipment supports a combination of a serving cell handover function and an uplink/downlink serving cell decoupling function.

6. A cell handover control method, comprising:
when a first triggering event that is reported by user equipment and that is used to represent that the user equipment is to move from a serving cell to a target cell is received, generating a first operation indicator that is used to instruct the user equipment to hand over an uplink serving cell or a downlink serving cell to the target cell;
determining a preconfigured parameter that is used to configure a downlink high speed physical downlink shared channel HS-DSCH link and/or an uplink enhanced dedicated transport channel E-DCH link of the user equipment; and
delivering the first operation indicator and the preconfigured parameter to the user equipment, so that the user equipment hands over the downlink serving cell or the uplink serving cell to the target cell according to the first operation indicator and the preconfigured parameter.

7. The method according to claim 6, wherein when the first triggering event occurs, before the generating a first operation indicator that is used to instruct the user equipment to hand over an uplink serving cell or a downlink serving cell to the target cell, the method further comprises:
detecting whether a report, which is sent by the user equipment, of supporting a capability for enhanced uplink/downlink serving cell decoupling is received, wherein the capability for enhanced uplink/downlink serving cell decoupling represents that the user equipment supports a combination of a serving cell handover function and an uplink/downlink serving cell decoupling function.

8. A method for indicating a cell, comprising:
obtaining an indicator of an uplink serving cell on a secondary frequency that is sent by a radio network controller RNC, wherein the indicator of the uplink serving cell comprises one or a combination of the following information: an indicator of an uplink serving link on the secondary frequency, a scrambling code of an uplink serving cell on the secondary frequency, or cell timing reference configuration information of a primary frequency and cell timing reference configuration information of the secondary frequency; and
determining that a link indicated by the indicator of the uplink serving link is an uplink serving link on the secondary frequency, if the indicator of the uplink serving cell comprises the indicator of the uplink serving link on the secondary frequency; or
determining that a link that comprises the scrambling code of the uplink serving cell is an uplink serving link on the secondary frequency, if the scrambling code of the uplink serving cell on the secondary frequency is received,

9. A cell handover apparatus, comprising:
a receiving module, configured to receive a first operation indicator and a preconfigured parameter that are sent by a radio network controller RNC; and
a handover module, configured to: when the first operation indicator is used to instruct to hand over only a downlink serving cell, obtain a configuration parameter of a downlink high speed physical downlink shared channel HS-DSCH link from the preconfigured parameter, and according to the configuration parameter of the downlink HS-DSCH link, hand over the downlink serving cell from a serving cell to a target cell and keep an uplink serving cell in the serving cell; or when the first operation indicator is used to instruct to hand over only an uplink serving cell, obtain a configuration parameter of an uplink enhanced dedicated transport channel E-DCH link from the preconfigured parameter, and hand over the uplink serving cell from a serving cell to a target cell according to the configuration parameter of the uplink E-DCH link.

10. The apparatus according to claim 9, wherein the receiving module is specifically configured to: when an active set update message delivered by the RNC is received, obtain the first operation indicator and the preconfigured parameter from the active set update message, wherein the configuration parameter of the downlink high speed physical downlink shared channel HS-DSCH link and/or the configuration parameter of the uplink enhanced dedicated transport channel E-DCH link are configured in the preconfigured parameter.

11. The apparatus according to claim 9 or 10, wherein the receiving module is further configured to receive a handover instruction or message that is sent by a target base station that corresponds to the target cell or by the RNC and that is used to instruct user equipment to perform serving cell handover; and
the handover module is further configured to hand over the downlink serving cell to the target cell according to the received first operation indicator and the configuration parameter of the downlink HS-DSCH link that is comprised in the preconfigured parameter, wherein the configuration parameter of the uplink E-DCH link remains unchanged.

12. The apparatus according to claim 9 or 10, wherein the receiving module is further configured to receive a reconfiguration message sent by the RNC; and
the handover module is further configured to: obtain, from the reconfiguration message, a second operation indicator that is used to instruct to hand over the uplink serving cell to the target cell; and if a configuration parameter of an uplink E-DCH link that is carried in the reconfiguration message is the same as the configuration parameter of the uplink E-DCH link in the preconfigured parameter, hand over the uplink serving cell to the target cell according to the second operation indicator and the configuration parameter of the uplink E-DCH link in the reconfiguration message; or if the reconfiguration message does not carry a configuration parameter of an uplink E-DCH link, hand over the uplink serving cell to the target cell according to the configuration parameter of the uplink E-DCH link in the preconfigured parameter.

13. The apparatus according to claims 9 to 12, further comprising:
a reporting module, configured to report to the RNC that a capability for enhanced uplink/downlink serving cell decoupling is supported, wherein the capability for enhanced uplink/downlink serving cell decoupling represents that the user equipment supports a combination of a serving cell handover function and an uplink/downlink serving cell decoupling function.

14. A cell handover control apparatus, comprising:
a generation module, configured to: when a first triggering event that is reported by user equipment and that is used to represent that the user equipment is to move from a serving cell to a target cell is received, generate a first operation indicator that is used to instruct the user equipment to hand over an uplink serving cell or a downlink serving cell to the target cell;
a determining module, configured to determine a preconfigured parameter that is used to configure a downlink high speed physical downlink shared channel HS-DSCH link and/or an uplink enhanced dedicated transport channel E-DCH link of the user equipment; and
a delivering module, configured to deliver the first operation indicator and the preconfigured parameter to the user equipment, so that the user equipment hands over the downlink serving cell or the uplink serving cell to the target cell according to the first operation indicator and the preconfigured parameter.

15. The apparatus according to claim 14, further comprising:
a detection module, configured to detect whether a report, which is sent by the user equipment, of supporting a capability for enhanced uplink/downlink serving cell decoupling is received, wherein the enhanced uplink/downlink serving cell decoupling represents that the user equipment supports a combination of a serving cell handover function and an uplink/downlink serving cell decoupling function.

16. A device, comprising one or more processors, a memory, and one or more programs, wherein the one or more programs are stored in the memory, and the one or more processors invoke the one or more programs from the memory and execute the one or more programs; and
the one or more programs are configured for performing the following steps:
receiving a first operation indicator and a preconfigured parameter that are sent by a radio network controller RNC; and
when the first operation indicator is used to instruct to hand over only a downlink serving cell, obtaining a configuration parameter of a downlink high speed physical downlink shared channel HS-DSCH link from the preconfigured parameter, and according to the configuration parameter of the downlink HS-DSCH link, handing over the downlink serving cell from a serving cell to a target cell and keeping an uplink serving cell in the serving cell; or
when the first operation indicator is used to instruct to hand over only an uplink serving cell, obtaining a configuration parameter of an uplink enhanced dedicated transport channel E-DCH link from the preconfigured parameter, and handing over the uplink serving cell from a serving cell to a target cell according to the configuration parameter of the uplink E-DCH link.

17. The device according to claim 16, wherein the one or more programs are further configured for performing the following step:
when an active set update message delivered by the RNC is received, obtaining the first operation indicator and the preconfigured parameter from the active set update message, wherein the configuration parameter of the downlink high speed physical downlink shared channel HS-DSCH link and/or the configuration parameter of the uplink enhanced dedicated transport channel E-DCH link are configured in the preconfigured parameter.

18. The device according to claim 16 or 17, wherein the one or more programs are further configured for performing the following steps:
receiving a handover instruction or message that is sent by a target base station that corresponds to the target cell or by the RNC and that is used to instruct user equipment to perform serving cell handover; and
handing over the downlink serving cell to the target cell according to the received first operation indicator and the configuration parameter of the downlink HS-DSCH link that is comprised in the preconfigured parameter, wherein the configuration parameter of the uplink E-DCH link remains unchanged.

19. The device according to claim 16 or 17, wherein the one or more programs are further configured for performing the following steps:
receiving a reconfiguration message sent by the RNC;
obtaining, from the reconfiguration message, a second operation indicator that is used to instruct to hand over the uplink serving cell to the target cell; and
if a configuration parameter of an uplink E-DCH link that is carried in the reconfiguration message is the same as the configuration parameter of the uplink E-DCH link in the preconfigured parameter, handing over the uplink serving cell to the target cell according to the second operation indicator and the configuration parameter of the uplink E-DCH link in the reconfiguration message; or
if the reconfiguration message does not carry a configuration parameter of an uplink E-DCH link, handing over the uplink serving cell to the target cell according to the configuration parameter of the uplink E-DCH link in the preconfigured parameter.

20. The device according to claims 16 to 19, wherein the one or more programs are further configured for performing the following step:
reporting to the RNC that a capability for enhanced uplink/downlink serving cell decoupling is supported, wherein the capability for enhanced uplink/downlink serving cell decoupling represents that the user equipment supports a combination of a serving cell handover function and an uplink/downlink serving cell decoupling function.

21. A radio network controller, comprising one or more processors, a memory, and one or more programs, wherein the one or more programs are stored in the memory, and the one or more processors invoke the one or more programs from the memory and execute the one or more programs; and
the one or more programs are configured for performing the following steps:
when a first triggering event that is reported by user equipment and that is used to represent that the user equipment is to move from a serving cell to a target cell is received, generating a first operation indicator that is used to instruct the user equipment to hand over an uplink serving cell or a downlink serving cell to the target cell;
determining a preconfigured parameter that is used to configure a downlink high speed physical downlink shared channel HS-DSCH link and/or an uplink enhanced dedicated transport channel E-DCH link of the user equipment; and
delivering the first operation indicator and the preconfigured parameter to the user equipment, so that the user equipment hands over the downlink serving cell or the uplink serving cell to the target cell according to the first operation indicator and the preconfigured parameter.

22. The radio network controller according to claim 21, wherein the one or more programs are further configured for performing the following step:
detecting whether a report, which is sent by the user equipment, of supporting a capability for enhanced uplink/downlink serving cell decoupling is received, wherein the enhanced uplink/downlink serving cell decoupling represents that the user equipment supports a combination of a serving cell handover function and an uplink/downlink serving cell decoupling function.
